# EUROPÄISCHE PATENTSCHRIFT

(11) **EP 3 599 399 B1**
(45) Veröffentlichungstag und Bekanntmachung des Hinweises auf die Patenterteilung: **13.07.2022**
(21) Anmeldenummer: 19187631.7
(22) Anmeldetag: 22.07.2019
(51) Int. Cl.: F16K 21/04, F16K 31/385, F16K 39/02, F16K 1/52, F16K 3/26, F16K 31/524

(54) **SANITÄRVENTIL MIT MEMBRANVENTIL**
PLUMBING VALVE WITH MEMBRANE VALVE
SOUPAPE SANITAIRE POURVUE D'UNE SOUPAPE À MEMBRANE

(30) Priorität: 27.07.2018 DE 102018118183
(43) Veröffentlichungstag der Anmeldung: 29.01.2020
(73) Patentinhaber: Ideal Standard International NV, 1935 Zaventem (BE)
(72) Erfinder: Müller, Alexander, 54518 Hupperath (DE)
(74) Vertreter: Feucker, Max Martin

(56) Entgegenhaltungen:
- EP-A1- 3 147 546
- WO-A1-2005/038315
- WO-A2-2009/135490
- CN-U- 204 805 691
- JP-A- 2008 256 141
- US-A1- 2003 189 111

## Beschreibung

Die vorliegende Erfindung betrifft ein Sanitärventil mit einem Wassereinlass, einem Wasserauslass, einem Membranventil, welches zwischen dem Wassereinlass und dem Wasserauslass angeordnet ist, wobei das Membranventil einen Ventilsitz, eine Ausgleichsöffnung, eine Steueröffnung und einen Steuerkolben aufweist, der durch eine Druckbetätigung in axialer Richtung in eine erste und in eine zweite stabile axiale Position bringbar ist, wobei der Steuerkolben die Steueröffnung in der ersten Stellung schließt und in der zweiten Stellung durchfliessbar (geöffnet) hält und mit einer Verstelleinrichtung, mit der durch eine Drehbewegung der Durchfluss durch das Sanitärventil bei geöffnetem Membranventil veränderbar ist.

Wenn der Steuerkolben die Steueröffnung in der ersten Stellung geschlossen hält, baut sich in einem dem Ventilsitz gegenüberliegenden Druckraum ein Druck ausgehend von dem am Wassereinlass anliegenden Wasserdruck durch die Ausgleichsöffnung hindurch auf. Durch den im Druckraum vorliegenden Druck wird das Membranventil in seiner geschlossenen Stellung gehalten. Wird die Steueröffnung durch eine insbesondere axiale Bewegung des Steuerkolbens freigegeben, so baut sich der Druck im Druckraum durch die geöffnete Steueröffnung hindurch ab, woraufhin das Membranventil in seine geöffnete Stellung gelangt. Solche Sanitärventile sind zum Absperren bzw. Freigeben des Wasserflusses vorgesehen.

Ein Sanitärventil mit den vorgenannten Merkmalen ist aus DE 10 2012 221 043 A1 bekannt. Um den Durchfluss bei geöffnetem Membranventil einstellen zu können, wird vorgeschlagen, dass durch eine Drehbewegung ein Anschlag zur Vorgabe der Stellung des Membranventils in seinem geöffneten Zustand verstellbar ist. Somit kann bei geöffnetem Membranventil der Strömungsquerschnitt zwischen dem Membranventil und dem Ventilsitz eingestellt werden.

Ein Sanitärventil mit den Merkmalen des Oberbegriffs des Anspruchs 1 ist aus JP 2008-256 141 A bekannt, bei dem allerdings ein erstes Bedienelement in Form eines Druckknopfes vorgesehen ist, um das Membranventil durch eine Druckbetätigung zwischen einer Durchflussstellung und einer Öffnungsstellung umzuschalten, und ein zweites drehbar zu dem Druckknopf gelagertes Drehelement vorgesehen ist, mit dem der Durchfluss durch das Sanitärventil verändert werden kann. Es ist somit einerseits ein komplizierterer Aufbau gegeben und andererseits für den Bediener nicht eindeutig, wie das Sanitärventil zu betätigen ist.

Aus DE 10 2014 110 550 A1, WO 2009 / 135 490 A2 und WO 2015 / 010 685 A2 ist jeweils ein Heizungsventil für einen Heizkörper eines geschlossenen Hydrauliksystems bekannt, bei dem das Membranventil dazu vorgesehen ist den Druckabfall über dem Heizungsventil konstant zu halten. Aus US 2009 / 0 146 090 A1 ist hingegen ein weiteres Sanitärventil bekannt. Aus EP 3 147 546 A1 und aus CN 204 805 691 U sind weitere Sanitärventile mit den Merkmalen des Oberbegriffs des Anspruchs 1 bekannt.

Aufgabe der vorliegenden Erfindung ist es, eine Alternative anzugeben, um den Durchfluss durch ein Sanitärventil bei geöffnetem Membranventil ändern zu können.

Gelöst wird die Aufgabe durch ein Sanitärventil mit den Merkmalen des unabhängigen Anspruchs. Vorteilhafte Weiterbildungen des Sanitärventils sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe insbesondere durch ein Sanitärventil mit den eingangs genannten Merkmalen, bei dem die Verstelleinrichtung ein Durchflusselement aufweist, wobei das Durchflusselement mindestens eine Durchflussöffnung aufweist und dem Wassereinlass oder dem Wasserauslass zugeordnet ist, wobei die mindestens eine Durchflussöffnung des Durchflusselements durch die Drehbewegung in unterschiedliche Drehstellungen bringbar ist.

Erfindungsgemäß ist der Steuerkolben fest mit einer Betätigungskappe direkt oder indirekt verbunden, mittels derer eine Druckbetätigung und eine Drehbewegung auf den Steuerkolben ausgeübt werden kann. Somit wird eine Druckbetätigung der Betätigungskappe in eine axiale Bewegung des Steuerkolbens übersetzt, während eine Drehbewegung der Betätigungskappe in einer Drehbewegung des Steuerkolbens und damit in einer Drehbewegung des Durchflusselements resultiert. Die Betätigungskappe ist somit ebenfalls bevorzugt sowohl drehbar als auch axial beweglich in dem Gehäuse des Sanitärventils gelagert.

Die Erfindung sieht in ihrem Grundgedanken also vor, dass der Durchfluss durch das Sanitärventil durch Änderung des Strömungsquerschnitts am Wassereinlass oder am Wasserauslass geändert wird, wozu die mindestens eine Durchflussöffnung des Durchflusselements durch die Drehbewegung in unterschiedlich stark überlappende Stellungen mit mindestens einer den Wasserauslass oder den Wassereinlass bildenden Durchlassöffnung gebracht werden kann.

Der Wassereinlass und der Wasserauslass werden insbesondere jeweils durch mindestens eine Durchlassöffnung in einem Gehäuse oder in einem Gehäuseteil des Sanitärventils gebildet. Es ist insbesondere bevorzugt, dass das Durchflusselement mehr als eine Durchflussöffnung aufweist und dass der Wassereinlass und der Wasserauslass mehr als eine Durchlassöffnung aufweist. Insbesondere weist das Durchflusselement genauso viele Durchflussöffnungen auf, wie der ihm zugeordnete Wassereinlass oder Wasserauslass Durchlassöffnungen aufweist. Das Durchflusselement kann aber auch mehr oder weniger Durchflussöffnungen aufweisen als Durchlassöffnungen ausgebildet sind. Bevorzugt ist das Durchflusselement innerhalb des den Wassereinlass oder Wasserauslass bildenden Gehäuseteils angeordnet. Das Durchflusselement kann unmittelbar angrenzend an einem die Durchlassöffnungen aufweisenden Abschnitt des Gehäuses angeordnet sein. Es kann aber auch ein Zwischenteil, wie Hülse, zwischen dem Gehäuse und dem Durchflusselement angeordnet sein, wobei das Zwischenteil den Durchlassöffnungen entsprechende Öffnungen aufweist.

Das Durchflusselement ist bevorzugt dem Wasserauslass zugeordnet. Der Wassereinlass ist bevorzugt in radialen Mantelflächen des Gehäuses des Sanitärventils ausgebildet, während der Wasserauslass an einem axialen Ende des Sanitärventils ausgebildet ist, wobei der Wasserauslass radial und/oder axial ausgerichtet sein kann.

Wenn der Wassereinlass oder der Wasserauslass in einem zylinderförmigen, radial ausgerichteten Abschnitt eines Gehäuses ausgebildet ist, ist bevorzugt, dass das Durchflusselement einen kreiszylinderförmigen Mantel aufweist, in dem die mindestens eine Durchflussöffnung ausgebildet ist.

Ist hingegen der Wassereinlass oder der Wasserauslass in einer Stirnseite eines Gehäuses des Sanitärventils ausgebildet, ist bevorzugt, dass das Durchflusselement einen scheibenförmigen Abschnitt aufweist, in dem die mindestens eine Durchflussöffnung ausgebildet ist.

Es kann vorgesehen sein, dass das Durchflusselement unabhängig von dem Steuerkolben betätigt werden kann. Bevorzugt ist jedoch, dass das Durchflusselement drehfest mit dem Steuerkolben gekoppelt ist, so dass das Durchflusselement durch Drehung des Steuerkolbens in unterschiedliche Drehstellungen bringbar ist.

Um die axiale Bewegung des Steuerkolbens zwischen seinen zwei stabilen Positionen von einer Bewegung des Steuerkolbens in axialer Richtung zu entkoppeln, ist der Steuerkolben bevorzugt axial beweglich zu dem Durchflusselement angeordnet. Bei einer axialen Bewegung des Steuerkolbens verbleibt das Durchflusselement also in seiner axialen Stellung, während eine Drehbewegung des Steuerkolbens in einer Drehbewegung des Durchflusselements resultiert.

Es kann hierbei vorgesehen sein, dass der Steuerkolben insbesondere bei einer scheibenförmigen Ausbildung des Durchflusselements eine nicht kreisrunde Öffnung in dem scheibenförmigen Abschnitt durchgreift, wobei der Steuerkolben in dem durchgreifenden Abschnitt eine mit der Öffnung in dem scheibenförmigen Abschnitt komplementäre Form aufweist. Alternativ kann vorgesehen sein, dass der Steuerkolben mittelbar über ein Kopplungselement und gegebenenfalls weitere Bauteile mit dem Durchflusselement gekoppelt ist.

In einer bevorzugten Ausführungsform ist der Steuerkolben durch die Steueröffnung hindurchgeführt, so dass der Steuerkolben die Steueröffnung durchgreift. In diesem Zusammenhang ist insbesondere vorgesehen, dass das Durchflusselement auf einer Seite mit dem Steuerkolben gekoppelt ist, die in Bezug auf das Membranventil einer Betätigungsseite des Steuerkolbens abgewandt ist.

In diesem Zusammenhang ist insbesondere vorgesehen, dass der Steuerkolben eine Verjüngung aufweist, die in der zweiten Stellung des Steuerkolbens so angeordnet ist, dass Wasser aus dem Druckraum entlang der Verjüngung durch die Steueröffnung strömen kann.

Um die Steueröffnung in der ersten Stellung des Steuerkolbens zu schließen, ist insbesondere eine Dichtung benachbart zu der Steueröffnung angeordnet. In der die Steueröffnung freigebenden zweiten Stellung des Steuerkolbens ist eine Wasserströmung zwischen der Verjüngung und der Dichtung möglich, während in der die Steueröffnung verschließenden ersten Stellung des Steuerkolbens der Steuerkolben mit einem axial an die Verjüngung angrenzenden Abschnitt in Kontakt mit der Dichtung ist, so dass kein Wasser durch die Steueröffnung strömen kann.

Um den Steuerkolben durch eine Druckbetätigung in unterschiedliche stabile axiale Positionen zu bringen und in diesen zu halten, ist insbesondere eine Kulissengestaltung ausgebildet, die den Steuerkolben nach einer Druckbetätigung in einer stabilen Position hält und die dafür vorgesehen ist, den Steuerkolben während der Druckbetätigung in eine andere stabile Position zu überführen. Diese Weiterschalteinrichtung mit eine Kulissengestaltung funktioniert nach dem Prinzip eines Kugelschreibers, wie sie für Sanitärventile mit Membranventilen bereits hinlänglich bekannt ist und beispielsweise in der EP 1 903 267 A beschrieben ist. Insbesondere ist hierzu die Betätigungskappe und/oder der Steuerkolben entgegen der Druckbetätigungsrichtung federvorgespannt, wobei ein Anschlag, beispielsweise in der Form eines Stiftes oder eines Vorsprunges, in den stabilen Positionen an entsprechend gestalteten Anlageflächen der Kulissengestaltung gedrückt wird. In Umfangsrichtung benachbart angeordnete Anlageflächen der Kulissengestaltung für die unterschiedlichen stabilen axialen Positionen sind in axialer Richtung versetzt zueinander angeordnet. Insbesondere eine der Kulissengestaltung mit den Anlageflächen für die stabilen Position gegenüberliegende Kulissenführung ist so ausgebildet, dass bei einer Druckbetätigung der Anschlag in Umfangsrichtung bewegt wird, so dass der Anschlag beim Entspannen der Feder an eine in Umfangsrichtung benachbarte Anlagefläche gelangt.

Die Erfindung sowie das technische Umfeld werden im Folgenden anhand der Figuren beispielhaft erläutert. Es zeigen schematisch:
- Figur 1:: eine Schnittansicht durch eine erste Ausführungsform eines Sanitärventils bei geschlossenem Membranventil,
- Figur 2:: eine Perspektivansicht des Membranventils der Figur 1,
- Figur 3:: eine Explosionsansicht einiger Bauteile des Sanitärventils der Figur 1,
- Figur 4:: die Schnittdarstellung gemäß Figur 4 bei geöffnetem Membranventil und maximalem Durchfluss,
- Figur 5:: die Schnittdarstellung gemäß Figur 1 bei geöffnetem Membranventil und minimalem Durchfluss und
- Figuren 6 bis 9:: eine zweite Ausführungsform eines Sanitärventils.

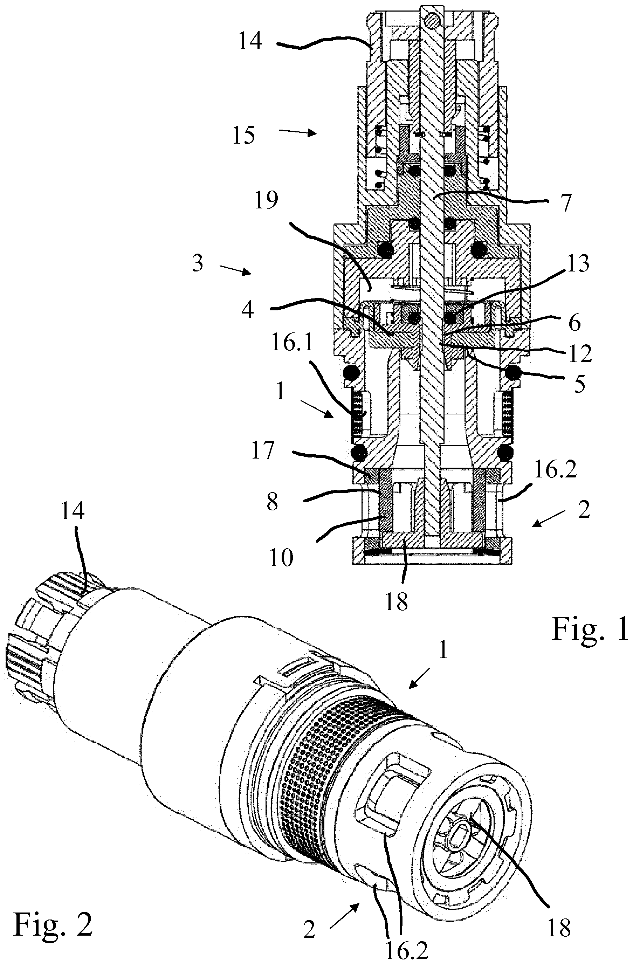

Das in den Figuren 1 bis 5 dargestellte Sanitärventil weist in seinem Gehäuse einen Wassereinlass 1 auf, der durch mehrere Durchlassöffnungen 16.1 gebildet ist, wobei radial außen vor den Durchlassöffnungen 16.1 ein Filter angeordnet ist.

Das Sanitärventil weist zudem einen Wasserauslass 2 auf, der durch mehrere Durchlassöffnungen 16.2 und durch eine axiale Stirnöffnung gebildet ist.

In Strömungsrichtung zwischen dem Wassereinlass 1 und dem Wasserauslass 2 ist ein Membranventil 3 ausgebildet, welches einen Ventilkörper 4 umfasst, der in der Figur 1 dargestellten geschlossenen Stellung des Membranventils auf einem Ventilsitz 5 aufliegt. In dem Ventilkörper 4 ist eine nicht dargestellte Ausgleichsöffnung ausgebildet, die eine Fluidverbindung zwischen dem Wassereinlass 1 und einem oberhalb des Membranventils angeordneten Druckraum 19 herstellt.

In dem Ventilkörper 4 ist zudem eine Steueröffnung 6 ausgebildet, die von einem Steuerkolben 7 durchgriffen wird. Der Steuerkolben 7 weist eine Verjüngung 12 auf, wobei ein an die Verjüngung 12 angrenzender Abschnitt des Steuerkolbens 7 in der gemäß Figur 1 geschlossenen Stellung des Membranventils 3 mit einer Dichtung 13 so zusammenwirkt, dass eine Fluidverbindung aus dem Druckraum 19 in Richtung des Wasserauslasses 2 durch die Steueröffnung 6 unterbunden ist.

Der Steuerkolben 7 ist auf der dem Wasserauslass 2 abgewandten Seite mit einer Betätigungskappe 14 verbunden, welche drehbar und entgegen einer Federkraft axial beweglich in einem Gehäuse des Sanitärventils gelagert ist.

Es ist zudem eine Kulissengestaltung 15 ausgebildet, die es nach dem Kugelschreiberprinzip erlaubt, den Steuerkolben 7 in zwei stabile axiale Positionen zu bringen, in denen sich der Steuerkolben 7 in unterschiedlichen axialen Stellungen befindet.

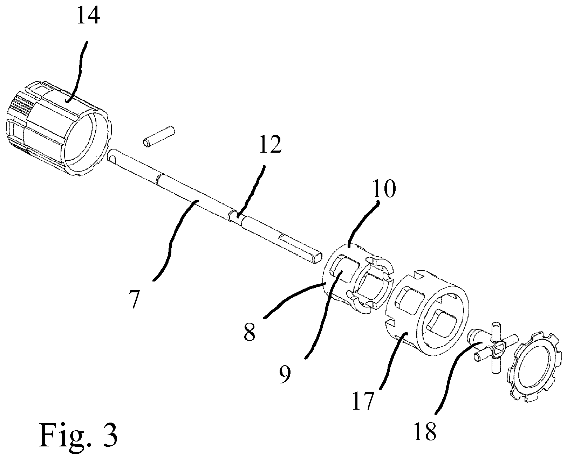

Wie insbesondere aus Figur 3 hervorgeht, ist der Steuerkolben 7 auf seiner dem Wasserauslass 2 zugewandten Seiten drehfest, aber axial beweglich mit einem Kopplungselement 18 verbunden ist. Das Kopplungselement 18 ist wiederum drehfest mit einem Durchflusselement 8 verbunden ist. Das Durchflusselement 8 weist einen Mantel 10 auf, in dem Durchflussöffnungen 9 ausgebildet sind. Im montierten Zustand ist eine Hülse 17 zwischen dem Durchflusselement 8 und dem Wasserauslass 2 angeordnet, wobei die Öffnungen in der Hülse 17 mit den Durchlassöffnungen 16.2 des Wasserauslasses 2 fluchten.

In dem in Figur 1 dargestellten Zustand ist das Membranventil geschlossen, so dass ein Wasserfluss vom Wassereinlass 1 zum Wasserauslass 2 unterbunden ist. Durch eine Druckbetätigung der Betätigungskappe 14 kann das Membranventil 3 geöffnet werden, wobei der Steuerkolben 7 durch die Druckbetätigung und aufgrund der Kulissengestaltung 15 nach axial nach oben versetzt wird. Hierdurch wird zunächst die Steueröffnung 6 freigegeben, da ein Wasserfluss aus dem Druckraum 9 entlang der Verjüngung 12 möglich ist, wodurch ein Druckabbau im Druckraum 19 stattfindet, so dass im Folgenden das Membranventil 3 in an sich bekannter Weise öffnet.

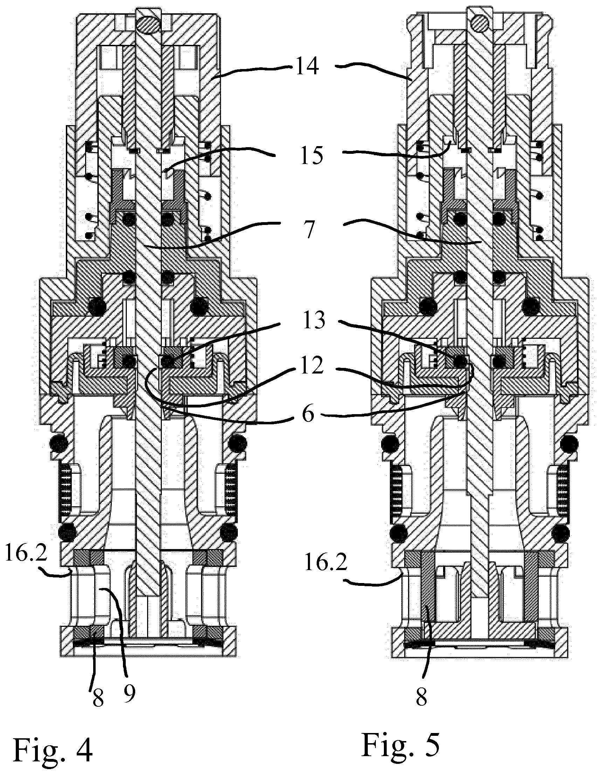

Der Durchfluss durch das Sanitärventil kann nun durch Drehen der Betätigungskappe 14 geändert werden. Durch Drehen der Betätigungskappe 14 kann nämlich das Verschlusselement 8 in unterschiedliche Drehstellungen gebracht werden, wobei in der in Figur 4 gezeigten Drehstellung die Durchflussöffnungen 9 des Durchflusselements 8 mit den Durchlassöffnungen 16.2 im Gehäuse des Sanitärventils fluchten, so dass ein maximaler Durchfluss möglich ist.

In der in Figur 5 dargestellten Drehstellung werden hingegen die Durchlassöffnungen 16.2 durch den Mantel 10 des Durchflusselements 8 zumindest zum größten Teil versperrt, so dass eine minimale Durchflussrate eingestellt ist. Bei dem Ausführungsbeispiel der Figuren 1 bis 5 kann auch ein Wasseraustritt an der Stirnseite des Sanitärventils erfolgen.

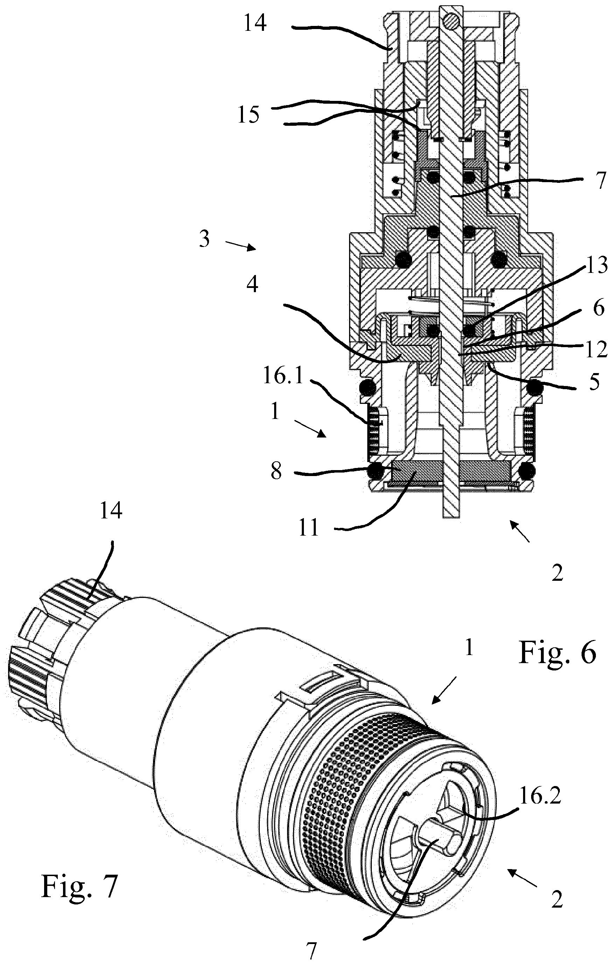

Das in den Figuren 6 bis 9 dargestellte Sanitärventil unterscheidet sich von dem Sanitärventil der Figuren 1 bis 5 in der Ausbildung des Wasserauslasses 2 und des Verschlusselements 8, so dass im Folgenden nur auf diese Unterschiede eingegangen wird.

Gemäß der Ausführungsform der Figuren 6 bis 9 ist der Wasserauslass 2 durch zwei Durchlassöffnungen 16.2 an der unteren Stirnseite des Sanitärventils gebildet.

Das Durchflusselement 8 ist als eine Scheibe 11 ausgebildet, in der die Durchflussöffnungen 9 ausgebildet sind. Der Steuerkolben 7 durchgreift mit seinem wasserauslassseitigen Ende das Durchflusselement 8 unmittelbar, wobei eine drehfeste Verbindung vorliegt, eine axiale Relativbewegung aber möglich ist.

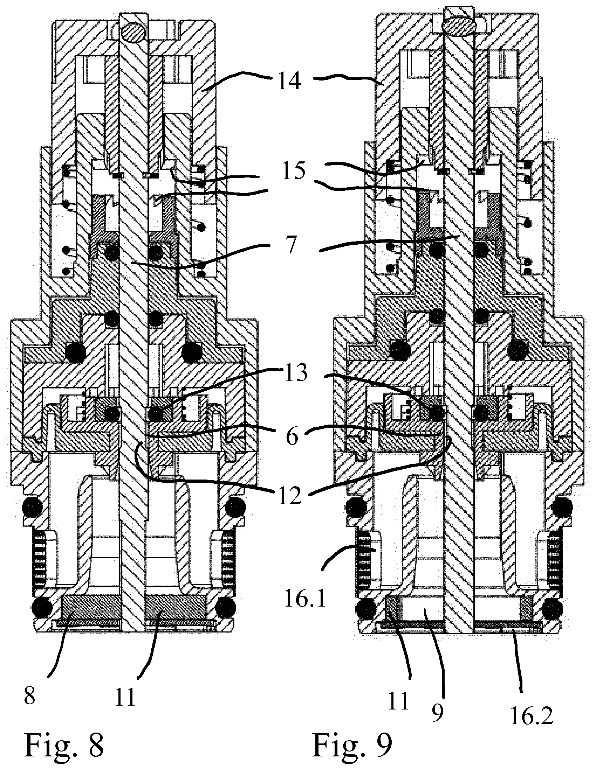

In der in Figur 8 dargestellten Öffnungsstellung des Membranventils 3 fluchten die Durchflussöffnungen 9 des Durchflusselements 8 mit den Durchlassöffnungen 16.2 des Wasserauslasses 2, so dass ein maximaler Durchfluss möglich ist. In der in Figur 9 dargestellten Drehstellung des Durchflusselements 8 werden hingegen die Durchlassöffnungen 16.2 zum größten Teil von dem Durchflusselement 9 verschlossen, so dass nur ein minimaler Durchfluss durch das Sanitärventil möglich ist.

### Bezugszeichenliste

- 1: Wassereinlass
- 2: Wasserauslass
- 3: Membranventil
- 4: Ventilkörper
- 5: Ventilsitz
- 6: Steueröffnung
- 7: Steuerkolben
- 8: Durchflusselement
- 9: Durchflussöffnung
- 10: Mantel
- 11: Scheibe
- 12: Verjüngung
- 13: Dichtung
- 14: Betätigungskappe
- 15: Kulissengestaltung
- 16: Durchlassöffnung
- 17: Hülse
- 18: Kopplungselement
- 19: Druckraum

## Patentansprüche

1. Sanitärventil mit
- einem Wassereinlass (1),
- einem Wasserauslass (2),
- einem Membranventil (3), welches zwischen dem Wassereinlass (1) und dem Wasserauslass (2) angeordnet ist, wobei das Membranventil (3)
- einen Ventilsitz (5),
- eine Ausgleichsöffnung,
- eine Steueröffnung (6) und
- einen Steuerkolben (7) aufweist, wobei der Steuerkolben (7) durch eine Druckbetätigung in eine erste und in eine zweite stabile Position bringbar ist, wobei der Steuerkolben (7) die Steueröffnung (6) in der ersten Stellung schließt und in der zweiten Stellung durchfließbar hält, und
- einer Verstelleinrichtung, mit der durch eine Drehbewegung der Durchfluss durch das Sanitärventil bei geöffnetem Membranventil (3) veränderbar ist, wobei die Verstelleinrichtung ein Durchflusselement (8) aufweist, wobei das Durchflusselement (8) mindestens eine Durchflussöffnung (9) aufweist und dem Wassereinlass (1) oder dem Wasserauslass (2) zugeordnet ist, wobei die mindestens eine Durchflussöffnung (9) des Durchflusselements (8) durch die Drehbewegung in unterschiedliche Drehstellungen bringbar ist, **dadurch gekennzeichnet, dass**
der Steuerkolben (7) fest mit einer Betätigungskappe (14) verbunden ist.

2. Sanitärventil nach Anspruch 1, wobei das Durchflusselement (8) einen zylinderförmigen Mantel (10) aufweist, wobei die mindestens eine Durchflussöffnung (9) in dem zylinderförmigen Mantel (10) ausgebildet ist.

3. Sanitärventil nach Anspruch 1 oder 2, wobei das Durchflusselement (8) einen scheibenförmigen Abschnitt (11) aufweist, wobei die mindestens eine Durchflussöffnung (9) in dem scheibenförmigen Abschnitt (11) ausgebildet ist.

4. Sanitärventil nach einem der vorhergehenden Ansprüche, wobei das Durchflusselement (8) drehfest mit dem Steuerkolben (7) gekoppelt ist.

5. Sanitärventil einem der vorhergehenden Ansprüche, wobei der Steuerkolben (7) axial beweglich zu dem Durchflusselement (8) angeordnet ist.

6. Sanitärventil nach einem der vorhergehenden Ansprüche, wobei der Steuerkolben (7) die Steueröffnung (6) durchgreift.

7. Sanitärventil nach Anspruch 6, wobei der Steuerkolben (7) eine Verjüngung (12) aufweist, entlang derer in der zweiten Stellung des Steuerkolbens (7) das Wasser durch die Steueröffnung (6) strömt.

8. Sanitärventil nach Anspruch 6 oder 7, wobei eine Dichtung (13) benachbart zu der Steueröffnung (6) angeordnet ist.

9. Sanitärventil nach einem der vorhergehenden Ansprüche, wobei eine Kulissengestaltung (15) ausgebildet ist, die den Steuerkolben (7) nach einer Druckbetätigung in der stabilen Position hält.

## Claims

1. Sanitary valve with
- a water inlet (1),
- a water outlet (2),
- a membrane valve (3), which is arranged between the water inlet (1) and the water outlet (2), wherein the membrane valve (3) comprises
- a valve seat (5)
- an equalisation opening,
- a control opening (6) and
- a control plunger (7), wherein through pressure actuation the control plunger (7) can be brought into a first and into a second stable position, wherein in the first position the control plunger (7) closes the control opening (6) and in the second position maintains a flow through it, and
- an adjusting device, with which, by way of a rotational movement, the flow through the sanitary valve when the membrane valve is open (3), can be changed, wherein the adjusting device comprises a throughflow element (8), wherein the throughflow element (8) comprises at least one throughflow opening (9) and is assigned to the water inlet (1) or to the water outlet (2), wherein the at least one throughflow opening (9) of the throughflow element (8) can be brought into different rotary positions through the rotational movement, **characterised in that**
the control plunger (7) is firmly connected to an actuating cap (14).

2. Sanitary valve according to claim 1, wherein the throughflow element (8) comprises a cylindrical casing (10), wherein the at least one throughflow opening (9) is formed in the cylindrical casing (10).

3. Sanitary valve according to claim 1 or 2, wherein the throughflow element (8) comprises a disk-shaped section (11), wherein the at least one throughflow opening (9) is formed in the disk-shaped section (11).

4. Sanitary valve according to any one of the preceding claims, wherein the throughflow element (8) is connected to the control plunger (7) in a torque-resistant manner.

5. Sanitary valve according to any one of the preceding claims, wherein the control plunger (7) is arranged in an axially movable manner with regard to the throughflow element (8).

6. Sanitary valve according to any one of the preceding claims, wherein the control plunger (7) extends through the control opening (6).

7. Sanitary valve according to claim 6, wherein the control plunger (7) has a tapering (12) along which, in the second position of the control plunger (7), the water flows through the control opening (6).

8. Sanitary valve according to claim 6 or 7, wherein a seal (13) is arranged adjacent to the control opening (6).

9. Sanitary valve according to any one of the preceding claims wherein a connecting link configuration (15) is formed, which after a pressure actuation keeps the control plunger (7) in the stable position.

## Revendications

1. Vanne de plomberie, dotée
- d'une entrée d'eau (1),
- d'une sortie d'eau (2),
- d'une soupape à membrane (3), laquelle est placée entre l'entrée d'eau (1) et la sortie d'eau (2), la soupape à membrane (3) comportant
- un siège de soupape (5),
- un orifice d'équilibrage,
- un orifice de commande (6) et
- un piston de commande (7), le piston de commande (7) étant susceptible d'être amené par une manœuvre en pression dans une première et dans une deuxième positions stables, le piston de commande (7) fermant l'orifice de commande (6) dans la première position et le maintenant dans un état irrigable, dans la deuxième position
- d'un système d'ajustage, à l'aide duquel, par un mouvement rotatif, le débit à travers la vanne de plomberie est variable lorsque la soupape à membrane (3) est ouverte, le système d'ajustage comportant un élément d'écoulement (8), l'élément d'écoulement (8) comportant au moins un orifice d'écoulement (9) et étant associé à l'entrée d'eau (1) ou à la sortie d'eau (2), l'au moins un orifice d'écoulement (9) de l'élément d'écoulement (8) étant susceptible d'être amené par un mouvement en rotation dans différentes positions en rotation, **caractérisée en ce que** le piston de commande (7) est fixement relié avec un capuchon de manœuvre (14).

2. Vanne de plomberie 1, l'élément d'écoulement (8) comportant une enveloppe (10) cylindrique, l'au moins un orifice d'écoulement (9) étant conçu dans l'enveloppe (10) cylindrique.

3. Vanne de plomberie selon la revendication 1 ou 2, l'élément d'écoulement (8) comportant un segment (11) en forme de disque, l'au moins un orifice d'écoulement (9) étant conçu dans le segment (11) en forme de disque.

4. Vanne de plomberie selon l'une quelconque des revendications précédentes, l'élément d'écoulement (8) étant couplé de manière solidaire en rotation avec le piston de commande (7).

5. Vanne de plomberie selon l'une quelconque des revendications précédentes, le piston de commande (7) étant placé de manière mobile en direction axiale par rapport à l'élément d'écoulement (8).

6. Vanne de plomberie selon l'une quelconque des revendications précédentes, le piston de commande (7) traversant l'orifice de commande (6).

7. Vanne de plomberie selon la revendication 6, le piston de commande (7) comportant un effilement (12), le long duquel, dans la deuxième position du piston de commande (7), l'eau coule à travers l'orifice de commande (6).

8. Vanne de plomberie selon la revendication 6 ou 7, un joint (13) étant placé au voisinage de l'orifice de commande (6).

9. Vanne de plomberie selon l'une quelconque des revendications précédentes, une structure en coulisse (15) étant conçue, qui maintient le piston de commande (7) dans la position stable, après une manœuvre en pression.
